# EUROPÄISCHE PATENTSCHRIFT

(11) **EP 1 759 131 B1**
(45) Veröffentlichungstag und Bekanntmachung des Hinweises auf die Patenterteilung: **09.01.2008**
(21) Anmeldenummer: 05770250.8
(22) Anmeldetag: 11.06.2005
(51) Int. Cl.: F16H 63/48

(54) **AKTUATORVORRICHTUNG ZUM BETÄTIGEN EINES VERRIEGELUNGSMECHANISMUS**
ACTUATOR DEVICE FOR ACTUATING A LOCKING MECHANISM
DISPOSITIF ACTIONNEUR PERMETTANT DE COMMANDER UN MECANISME DE VERROUILLAGE

(30) Priorität: 22.06.2004 DE 102004030007
(43) Veröffentlichungstag der Anmeldung: 07.03.2007
(73) Patentinhaber: ZF FRIEDRICHSHAFEN AG, 88038 Friedrichshafen (DE)
(72) Erfinder: RÜHRINGER, Uwe, 88069 Tettnang (DE); SCHMID, Wolfgang, 88085 Langenargen (DE); SCHMIDT, Thilo, 88074 Meckenbeuren (DE)
(86) Internationale Anmeldenummer: PCT/EP2005/006284
(87) Internationale Veröffentlichungsnummer: WO 2005/124198

(56) Entgegenhaltungen:
- EP-A- 1 305 542
- EP-A- 1 408 260
- DE-A1- 10 015 782
- DE-A1- 10 105 637
- DE-A1- 10 245 386
- DE-A1- 19 848 733
- DE-A1- 19 858 543
- US-A1- 2002 092 720
- US-B1- 6 186 047
- US-B1- 6 471 027

## Beschreibung

Die Erfindung betrifft eine Aktuatorvorrichtung zum Betätigen eines Verriegelungsmechanismus gemäß der im Oberbegriff des Patentanspruches 1 näher definierten Art, wie aus des Praxis bekannt.

Aus der DE 198 48 733 A1 ist eine Vorrichtung zur Notentriegelung einer Parksperreneinrichtung für ein Kraftfahrzeug mit einem Automatikgetriebe bekannt, bei dem im normalen Betriebsmodus durch eine bedienpersonseitige Betätigung einer Fahrstufenwähleinrichtung mit Einlegen der Stellung "P" die im Automatikgetriebe integrierte elektrische Parksperreeinrichtung aktiviert wird. Die Parksperreneinrichtung steht mit der Vorrichtung über einen Übertragungsmechanismus in Wirkverbindung, welche an einem außerhalb des Fahrgastraums liegenden feststehenden Teil des Kraftfahrzeugs befestigt ist und über die die Parksperreneinrichtung manuell von einer Bedienperson ein- bzw. auslegbar ist. Die Vorrichtung umfasst auch den zum Abschleppen vorgesehenen Abschlepphaken, der sich während des Abschleppvorganges in einer die Parksperreneinrichtung entriegelnden Position befindet, so dass die Parksperreneinrichtung beim Abschleppen sicher ausgelegt ist.

Die Vorrichtung bzw. der Abschlepphaken weist zwei Endstellungen auf, 1 wobei der Abschlepphaken in der Endstellung, bei der die Parksperreneinrichtung entriegelt ist, arretierbar ist. Damit wird erreicht, dass die Parksperreneinrichtung in entriegeltem Zustand auch unter wechselnd angreifenden Kräften an der Vorrichtung sicher deaktiviert ist. Soll die Parksperreneinrichtung wieder aktiviert und der Abtrieb des Fahrzeuges festgestellt werden, ist die Arretierung der Vorrichtung automatisch durch Aufbringen einer einmaligen Kraft an der Vorrichtung lösbar und die Parksperreneinrichtung wird aufgrund einer Federeinrichtung wieder aktiviert. Die EP-A-1 408 260 zeigt eine Aktuatorvorrichtung zum Betätigen einer Parkbremse mit einem Kolben und einer Rasteinrichtung zum Halten des Kolbens in der verriegelten Stellung.

Darüber hinaus ist aus der Praxis eine Aktuatorvorrichtung zum Betätigen eines Verriegelungsmechanismus, insbesondere zum Betätigen einer Parksperrenklinke eines mit einem Automatgetriebe ausgeführten Antriebsstranges eines Fahrzeuges bekannt, die wenigstens eine mit einem Fluid beaufschlagbare und in Abhängigkeit des Fluiddrucks entgegen einer in Schließrichtung des Verriegelungsmechanismus wirkenden Federeinrichtung in Öffnungsrichtung des Verriegelungsmechanismus betätigbare und in axialer Richtung in einem Gehäuse verschiebbar angeordnete Kolbeneinheit aufweist. Des Weiteren ist die Aktuatoreinrichtung mit einer in einer einem geöffneten Zustand des Verriegelungsmechanismus äquivalenten axialen Position der Kolbeneinheit selbsttätig aktivierenden Rasteinrichtung zum Halten der Kolbeneinheit in der dem geöffnetem Zustand des Verriegelungsmechanismus äquivalenten axialen Position ausgeführt.

Zusätzlich ist die Aktuatorvorrichtung mit einer elektromagnetischen Betätigungseinrichtung zum Betätigen eines Löseelements, das zum Deaktivieren der Rasteinrichtung vorgesehen ist, ausgeführt. Die Kolbeneinheit ist wiederum mit einer Notentriegelungseinrichtung wirkverbunden, mittels der die Kolbeneinheit in die dem geöffnetem Zustand des Verriegelungsmechanismus äquivalente axiale Position bringbar ist.

Bei dieser aus der Praxis bekannten Aktuatorvorrichtung bzw. dem bekannten Parksperrenaktuator wird die Parksperre mittels hydraulischer oder pneumatischer Energie entriegelt und mittels Federenergie eingelegt. Damit die Parksperre auch ohne Vorliegen eines Fluiddrucks in geöffnetem Zustand verbleibt, wird das Löseelement über die elektromagnetische Betätigungseinrichtung entgegen einem Federspeicher in einer die Rasteinrichtung nicht deaktivierenden Position gehalten, so dass die Kolbeneinheit von der aktiven Rasteinrichtung in ihrer dem geöffneten Zustand des Verriegelungsmechanismus äquivalenten axialen Position gehalten wird und der Verriegelungsmechanismus bzw. die Parksperrenklinke nicht mit einem mit dem Abtrieb verbundenen Parksperrenrad in Eingriff steht.

Stehen sowohl die Funktionalität der elektromagnetischen Betätigungseinrichtung als auch die Funktionalität des hydraulischen bzw. pneumatischen Systems nicht zur Verfügung, wird die Parksperre des Kraftfahrzeuges über die in Schließrichtung des Verriegelungsmechanismus wirkende Federeinrichtung durch Aktivieren des Verriegelungsmechanismus eingelegt. Dies resultiert aus der Tatsache, dass das Löselement bei nicht bestromter elektromagnetischer Betätigungseinrichtung durch den dem Löseelement zugeordneten Federspeicher derart verstellt wird, das die Rasteinrichtung deaktiviert wird. Das bedeutet, dass bei einem Systemausfall des Kraftfahrzeuges, während dem weder ein hydraulischer oder ein pneumatischer Druck erzeugbar ist noch elektrische Energie aus dem Bordnetz zur Verfügung steht, der Parksperre während dieses so genannten Defaultzustandes als Vorzugslage der eingelegte Zustand, bei dem der Abtrieb des Fahrzeuges arretiert ist, zugeordnet ist.

Dieses Verhalten ist dann wünschenswert, wenn das Getriebe bei Ausfall der elektrischen Energie mit Hilfe eines hydraulischen oder pneumatischen Notprogramms betrieben werden kann und die Parksperre am Einfallen gehindert werden kann. Bei einem derartig ausgeführten Fahrzeug besteht für einen Fahrer nach wie vor die Möglichkeit, das Fahrzeug an einen vom Fahrer bestimmbaren Ort zu manövrieren und dort in sicherem Zustand abzustellen.

Ist ein Fahrzeug jedoch nicht mit einem hydraulischen oder pneumatischen Notprogramm ausgeführt, wird die Parksperre, welche mit der aus der Praxis bekannten Aktuatorvorrichtung zusammenwirkt, automatisch eingelegt, so dass der Abtrieb nachteilhafterweise arretiert ist und das Fahrzeug zunächst vom Fahrer nur mit Hilfe von aufwendigen Hilfsgeräten, wie beispielsweise einem Abschleppwagen, bewegt werden kann.

Selbstverständlich liegt es im Ermessen des Fachmannes, die bekannten Aktuatorvorrichtung in der aus dem Stand der Technik bekannten Art und Weise mit einer Notentriegelungseinrichtung auszuführen, mittels der die Parksperre manuell deaktivierbar ist. Die Entriegelung der Parksperre setzt jedoch dann zunächst ein aktives Handeln des Fahrers in Form einer Betätigung der Notentriegelungseinrichtung voraus, was jedoch in manchen Situationen unerwünscht ist.

Der vorliegenden Erfindung liegt daher die Aufgabe zugrunde, eine Aktuatorvorrichtung zum Betätigen eines Verriegelungsmechanismus, insbesondere zum Betätigen einer Parksperrenklinke eines mit einem Automatgetriebe ausgeführten Antriebsstranges eines Fahrzeuges, zur Verfügung zu stellen, bei dem die Parksperrenklinke bei Vorliegen eines Systemausfalls in der zuletzt angewählten Position verbleibt und vom Fahrer wunschgemäß und auf einfache Art und Weise manuell deaktivierbar oder aktivierbar ist.

Erfindungsgemäß wird diese Aufgabe mit einer Aktuatorvorrichtung gemäß den Merkmalen des Patentanspruches 1 gelöst.

Der Einsatz der erfindungsgemäß ausgeführten Aktuatorvorrichtung zum Betätigen eines Verriegelungsmechanismus, insbesondere zum Betätigen einer Parksperrenklinke eines mit einem Automatgetriebe ausgeführten Antriebsstranges, führt dazu, dass eine Parksperrenklinke bei Auftreten eines Systemausfalls in ihrer zuletzt angewählten Position verbleibt und eine Parksperre geöffnet oder geschlossen bleibt und bei einem Systemausfall keinen bevorzugten Zustand aufweist.

Dies wird dadurch erreicht, dass die Rasteinrichtung, die Kolbeneinheit und das Löseelement der Aktuatorvorrichtung derart miteinander zusammenwirken, dass bei geöffnetem Verriegelungsmechanismus und bei unbestromter elektromagnetischer Betätigungseinrichtung sowie bei geschlossenem Verriegelungsmechanismus und bei Anliegen eines Fluiddrucks an der Kolbeneinheit, bei dem an der Kolbeneinheit eine in Öffnungsrichtung des Verriegelungsmechanismus wirkende Kraftkomponenten angreift, die kleiner als eine Lösekraft des Verriegelungsmechanismus ist, der Verriegelungsmechanismus in dem aktuell eingestellten Zustand verbleibt.

Des Weiteren bietet der Einsatz der Aktuatorvorrichtung nach der Erfindung einer Bedienperson bzw. einem Fahrer des Fahrzeuges die Möglichkeit, den der Verriegelungsmechanismus bzw. die Parksperre ausgehend von dem bei einem Systemausfall jeweils aktuell vorliegenden Zustand des Verriegelungsmechanismus auf einfache Art und Weise manuell zu schließen oder manuell zu öffnen.

Dies wird wiederum dadurch erreicht, dass die Aktuatorvorrichtung einerseits mit einer mit der Kolbeneinheit wirkverbundenen Notentriegelungseinrichtung ausgebildet ist, mittels der die Kolbeneinheit in die dem geöffneten Zustand des Verriegelungsmechanismus äquivalente axiale Position bringbar ist, und anderseits mit einer Notverriegelungseinrichtung ausgeführt ist, mittels der die Rasteinrichtung deaktivierbar ist, so dass die Kolbeneinheit durch die Federkraft der in Schließrichtung des Verriegelungsmechanismus wirkenden Federeinrichtung in ihre dem geschlossenen Zustand des Verriegelungsmechanismus äquivalente axiale Position verstellt wird.

Vorteilhafte Weiterbildungen des Gegenstandes nach der Erfindung ergeben sich aus den Patentansprüchen und den unter Bezugnahme auf die Zeichnung prinzipmäßig beschriebenen Ausführungsbeispielen, wobei in der Beschreibung der verschiedenen Ausführungsbeispiele der Übersichtlichkeit halber für bau- und funktionsgleiche Bauteile dieselben Bezugszeichen verwendet werden.

Es zeigt:
Fig. 1 eine schematisierte Längsschnittansicht durch eine erste Ausführungsform einer erfindungsgemäß ausgebildeten Aktuatorvorrichtung; und
Fig. 2 ein zweites Ausführungsbeispiel einer erfindungsgemäßen Aktuatorvorrichtung in einer schematisierten Längsschnittansicht.

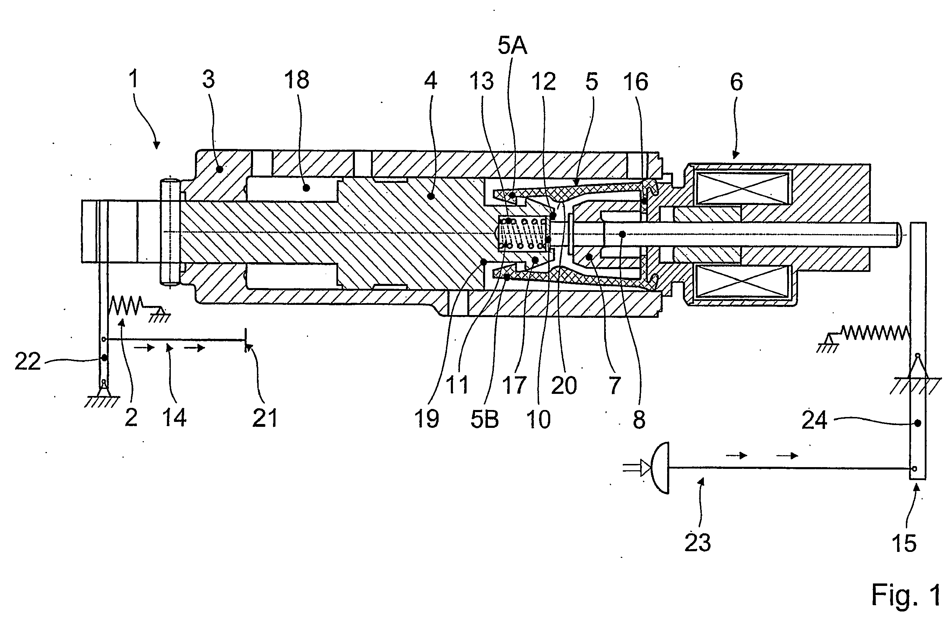

Fig. 1 zeigt eine schematisierte Längsschnittansicht einer Aktuatorvorrichtung 1 zum Betätigen eines nicht näher dargestellten Verriegelungsmechanismus, der vorliegend eine an sich bekannte Parksperreneinrichtung eines mit einem Automatgetriebe ausgeführten Antriebsstranges eines Kraftfahrzeuges ist. Dargestellt ist der Aktuatorzustand "Parksperre ausgelegt". Die Aktuatorvorrichtung 1 weist eine mit einem Fluid beaufschlagbare und in Abhängigkeit des Fluiddrucks entgegen einer in Schließrichtung des Verriegelungsmechanismus wirkenden Federeinrichtung 2 in Öffnungsrichtung des Verriegelungsmechanismus betätigbare und in axialer Richtung in einem Gehäuse 3 verschiebbar angeordnete Kolbeneinheit 4 auf.

Die Kolbeneinheit 4 ist in montiertem Zustand in nicht näher dargestellter Art und Weise mit einer Parkstange der Parksperrenrichtung verbunden, wobei die Parkstange wiederum derart mit einer Parksperrenklinke wirkverbunden ist, dass die Parksperrenklinke aufgrund einer axialen Bewegung der Kolbeneinheit und der damit verbundenen Parkstange mit einem mit dem Abtrieb des Antriebsstranges drehfest verbundenen Parksperrenrad in Eingriff bringbar ist oder aus dem Eingriff mit dem Parksperrenrad gebracht wird.

Des Weiteren ist die Aktuatorvorrichtung mit einer in einer einem geöffnetem Zustand des Verriegelungsmechanismus äquivalenten axialen Position der Kolbeneinheit 4 selbsttätig aktivierenden Rasteinrichtung 5 zum Halten der Kolbeneinheit 4 in der dem geöffnetem Zustand des Verriegelungsmechanismus äquivalenten axialen Position ausgebildet. Zusätzlich ist die Aktuatorvorrichtung 1 mit einer elektromagnetischen Betätigungseinrichtung 6 zum Betätigen eines Löseelements 7 ausgeführt, das zum Deaktivieren der Rasteinrichtung 5 vorgesehen ist und mit einer Kolbenstange 8 verbunden und gemeinsam mit Kolbenstange 8 längsbeweglich im Inneren des Gehäuses 3 angeordnet ist.

Die Kolbenstange 8 ist an ihrem der Kolbeneinheit 4 zugewandten Ende mit der Kolbeneinheit 4 über einen Federring 10 verbunden, wobei der Federring 10 in axialer Richtung über ein Federelement 11 gegen einen lnnenanschlag 12 der Kolbeneinheit 4 gedrückt ist. Das bedeutet, dass zwischen der Kolbenstange 8 und der Kolbeneinheit 4 eine Relativbewegung innerhalb konstruktiv vorgegebener Grenzen gegen die Federkraft des Federelementes 11 1 möglich ist, da die Kolbenstange 8 mit ihrem der Kolbeneinheit 4 zugewandten Ende in eine Bohrung 13 der Kolbeneinheit 4, in der auch das Federelement 11 angeordnet ist, eintaucht.

Die Kolbeneinheit 4 steht an ihrem der Kolbenstange 8 abgewandten Ende mit dem nicht näher dargestellten Verriegelungsmechanismus und mit einer Notentriegelungseinrichtung 14 derart in Wirkverbindung, dass die Kolbeneinheit 4 über die Notentriegelungseinrichtung 14 aus der dem geschlossenen Zustand des Verriegelungsmechanismus äquivalenten axialen Position in die dem geöffneten Zustand des Verriegelungsmechanismus äquivalente axiale Position verschiebbar ist.

Darüber hinaus steht die Kolbenstange 8 an ihrem der Kolbeneinheit 4 abgewandten Ende mit einer Notverriegelungseinrichtung 15 in Wirkverbindung, mittels der die Kolbenstange 8 und das damit verbundene Löseelement 7 von einer Bedienperson bzw. einem Fahrer des Fahrzeugs manuell in Richtung der Kolbeneinheit 4 verschiebbar ist, um die Parksperreneinrichtung bedarfsweise einlegen zu können.

Die in Fig. 1 dargestellte Aktuatorvorrichtung 1 weist im normalen Betriebmodus, während dem die Kolbeneinheit mit einem Fluiddruck beaufschlagbar ist und die elektromagnetische Betätigungseinrichtung bestrombar ist, folgende Funktionsweise auf:

Ausgehend von einem in Fig. 1 dargestellten Betriebszustand, bei dem das Löseelement 7 mit seinem der elektromagnetischen Betätigungseinrichtung 6 zugewandten Ende an radial verlaufenden Bereichen 16 der Rasteinrichtung 5 anliegt und ein wenigstens annähernd konisch ausgebildeter Bereich 17 der Kolbeneinheit 4 von der Rasteinrichtung 5 umfasst ist, befindet sich die Kolbeneinheit 4 in einem geöffneten Zustand des Verriegelungsmechanismus bzw. der Parksperreneinrichtung äquivalenten axialen Position.

Die Rasteinrichtung 5 ist in dem in Fig. 1 dargestellten Zustand der Aktuatorvorrichtung 1 aktiviert, so dass die Kolbeneinheit 4 durch Federarme 5A und 5B, von welchen in Fig. 1 lediglich zwei von vorzugsweise 4 gleichmäßig über den Umfang der Kolbeneinheit 4 verteilt angeordneten Federarmen dargestellt sind, derart gehalten, dass ein selbsttätiges Einlegen der Parksperrenklinke auch bei nicht anliegendem Fluiddruck im Ringraum 18 sicher vermieden ist.

Soll die Parksperreneinrichtung aufgrund einer Fahrerwunschvorgabe, die vorzugsweise über eine Fahrstufenwähleinrichtung ergeht, eingelegt werden, wird die elektromagnetische Betätigungseinrichtung 6 derart bestromt, dass das Löseelement 7 zusammen mit der Kolbenstange 8 in Richtung der Kolbeneinheit 4 ausgehend von der in Fig. 1 dargestellten Position zwischen die Federarme 5A und 5B der Rasteinrichtung 5 geschoben wird. Dabei kommt das Löseelement 7 mit zunehmendem Verstellweg 7 mit seinem der Kolbeneinheit 4 zugewandten Ende, welches mit einem kegeligen bzw. konischen Bereich ausgeführt ist, mit einem mit dem konischen Bereich des Löseelements 7 korrespondierenden und kegelig bzw. konisch ausgebildeten Zwischenbereich 20 der Federarme 5A und 5B derart in Eingriff, dass die Federarme 5A und 5B von dem Löseelement 7 radial immer weiter nach außen gedrückt werden, bis der Formschluss zwischen der Rasteinrichtung 5 und der Kolbeneinheit 4 im Bereich des reduzierten Durchmesserbereichs 19 aufgehoben ist. Beim Einlegen der Parksperre ist der Ringraum 18 drucklos und die elektromagnetische Betätigungseinrichtung 6 abgeschaltet.

Greift an der Kolbeneinheit 4 eine in Schließrichtung des Verriegelungsmechanismus wirkende resultierende Kraftkomponenten an, die sich jeweils aus der Federkraft der Federeinrichtung 2 und dem aktuell in dem Ringraum 18 anliegenden Fluiddruck zusammensetzt, wird die Kolbeneinheit 4 zu der elektromagnetischen Betätigungseinrichtung 6 hin verschoben, bis die Parksperreneinrichtung ausgelegt ist. Bei eingelegter Parksperreneinrichtung ist die Kolbeneinheit 4 aus dem Eingriffsbereich der Federarme 5A und 5B verschoben, so dass die Rasteinrichtung deaktiviert ist.

Anschließend wird die Bestromung der elektromagnetischen Betätigungseinrichtung 6 abgeschaltet, wodurch das Löseelement 7 aufgrund der Federkraft des Federelementes 11 wieder gegen die radialen Bereich 16 der Rasteinrichtung 5 in der in Fig. 1 dargestellten Art und Weise gedrückt wird. Da die Federarme 5A und 5B mit einer in Richtung der Mittelachse der Aktuatorvorrichtung 1 wirkenden Federspannung ausgebildet sind, klappen die Federarme 5A und 5B in radialer Richtung nach innen.

Wird der Ringraum 18 bei dem letztgenannten Zustand der Aktuatorvorrichtung 1 wiederum mit einem derartigen Fluiddruck beaufschlagt, dass die an der Kolbeneinheit 4 angreifende resultierende Kraftkomponente in Richtung des Löseelementes 7 wirkt, wird die Kolbeneinheit 4 von ihrer dem geschlossenen Zustand des Verstellmechanismus äquivalenten axialen Position in Richtung der elektromagnetischen Betätigungseinrichtung 6 verschoben, bis die Rasteinrichtung 5 in der nachbeschriebenen Art und Weise aktiviert ist.

Die Kolbeneinheit 4 wird aufgrund des in dem von dem Gehäuse 3 und der Kolbeneinheit 4 begrenzten Ringraum 18 vorherrschenden Fluiddruckes, der hydraulisch oder pneumatisch erzeugt sein kann, aus ihrer dem geschlossenen Zustand des Verriegelungsmechanismus äquivalenten axialen Position in Richtung der elektromagnetischen Betätigungseinrichtung 6 in axialer Richtung verstellt. Während der axialen Verstellung der Kolbeneinheit 4 werden die in Richtung der Mittelachse der Aktuatorvorrichtung 1 eingeklappten Federarme 5A und 5B der Rasteinrichtung 5 jeweils ausgehend von ihrem der Kolbeneinheit 4 zugewandten Enden, die an ihren der Kolbeneinheit 4 zugewandten Innenseiten ebenfalls konisch ausgeführt sind, mit zunehmendem Verstellweg der Kolbeneinheit 4 über den konischen Bereich 17 der Kolbeneinheit geführt.

Aufgrund der in Richtung der Kolbeneinheit 4 wirkenden Vorspannung der Federarme 5A und 5B kommen die Federarme 5A und 5B nach Überfahren des konischen Bereichs 17 an der Kolbeneinheit 4 in einem verringerten Durchmesserbereich 19 der Kolbeneinheit 4 mit ihren der Kolbeneinheit 4 zugewandten Enden zum Anliegen. Da sowohl die Federarme 5A und 5B am Ende ihrer konischen Bereiche als auch die Kolbeneinheit 4 am Ende ihres konischen Bereichs 17 jeweils mit Absätzen ausgeführt sind, die einander zugewandt sind und bei aktivierter Rasteinrichtung 6 als Anlageflächen zwischen den Federarmen 5A und 5B sowie der Kolbeneinheit 4 vorgesehen sind, wird die Kolbeneinheit 4 trotz einer an ihr angreifenden resultierenden Kraftkomponente, die in Schließrichtung des Verriegelungsmechanismus wirkt, von der Rasteinrichtung 5 in der in Fig. 1 dargestellten Position aufgrund der in Bereich der Absätze vorliegenden kraftschlüssigen Verbindung zwischen den Federarmen 5A und 5B und der Kolbeneinheit 4 gehalten.

Die in Schließrichtung des Verriegelungsmechanismus wirkende resultierende Kraftkomponente greift dann an der Kolbeneinheit 4 an, wenn die Federkraft der Federeinrichtung 2 größer als die auf die Kolbeneinheit 4 wirkende hydraulische oder pneumatisch Druckkraft des Ringraums 18 ist.

Des Weiteren ist die in Fig. 1 dargestellte Aktuatorvorrichtung 1 derart ausgeführt, dass die Aktuatorvorrichtung 1 bei einem Systemausfall des zur vorbeschriebenen Betriebsweise erforderlichen Steuersystems, bei dem weder ein Fluiddruck im Ringraum 18 zur Betätigung der Kolbeneinheit 4 bereitsteht noch eine Bestromung der elektromagnetischen Betätigungseinrichtung 6 möglich ist, dass der Verriegelungsmechanismus in seinem zuletzt eingenommenen Zustand, d. h. geöffnet oder geschlossen, verbleibt. Damit der Verriegelungsmechanismus bzw. die Parksperreneinrichtung dennoch weiterhin angesteuert werden kann, sind die Notentriegelungseinrichtung 14 und die Notverriegelungseinrichtung 15 vorgesehen, die einem Fahrer die Möglichkeit bieten, die aktuelle eingelegte Parksperreneinrichtung manuell zu entriegeln oder die aktuell ausgelegte Parksperreneinrichtung manuell einlegen zu können.

Dazu wirkt die Notentriegelungseinrichtung 14 über einen in beliebiger Art und Weise ausgebildeten Wirkmechanismus 21 mit einem vorliegend als Hebelelement 22 ausgeführten Übertragungselement derart mit der Kolbeneinheit 4 zusammen, dass die Kolbeneinheit 4 über den Wirkmechanismus 21 der Notentriegelungseinrichtung 14 aus ihrer dem geschlossenen Zustand äquivalenten axialen Position in die in Fig. 1 dargestellte und dem geöffnetem Zustand des Verriegelungsmechanismus äquivalenten axialen Position manuell von einen Fahrer verschiebbar ist, bis die Rasteinrichtung 5 aktiviert ist und die Kolbeneinheit 4 entgegen der Federkraft der Federeinrichtung 2 in dieser Position gehalten wird.

In diesem Betriebszustand der Aktuatorvorrichtung 1 und der dabei entriegelten Parksperreneinrichtung ist der Abtrieb des Fahrzeuges freigegeben und das Fahrzeug kann an einen von einem Fahrer gewünschten Ort durch Abschleppen oder Schieben des Fahrzeuges auf einfache Art und Weise verbracht werden.

Soll das Fahrzeug in abgestellten Zustand jedoch gegen Wegrollen gesichert werden, ist es vorteilhaft, wenn der Verriegelungsmechanismus auch wieder von der Bedienperson manuell in seinen geschlossenen Zustand überführt werden kann.

Dies wird über die Notverriegelungseinrichtung 15 realisiert, die einen weiteren beliebig ausführbaren Wirkmechanismus 23 und ein vorliegend ebenfalls als Hebelarmelement 24 dargestelltes Betätigungselement aufweist. Das Hebelarmelement 24 überträgt eine vom Fahrer manuell über den weiteren Wirkmechanismus 23 aufgebrachte Steuerkraft auf die Kolbenstange 8 derart, dass die Kolbenstange 8 gemeinsam mit dem Löseelement 7 zwischen die Federarme 5A und 5B geschoben wird und die mechanische (formschlüssige) Verbindung zwischen der Rasteinrichtung 5 und der Kolbeneinheit 4 aufgehoben wird. Sobald die Rasteinrichtung 5 durch das Löseelement 7 deaktiviert ist, wird die Kolbeneinheit 4 von der Federeinrichtung 2 in seine dem geschlossenen Zustand des Verriegelungsmechanismus äquivalente axiale Position verbracht und die Parksperreneinrichtung ist eingelegt.

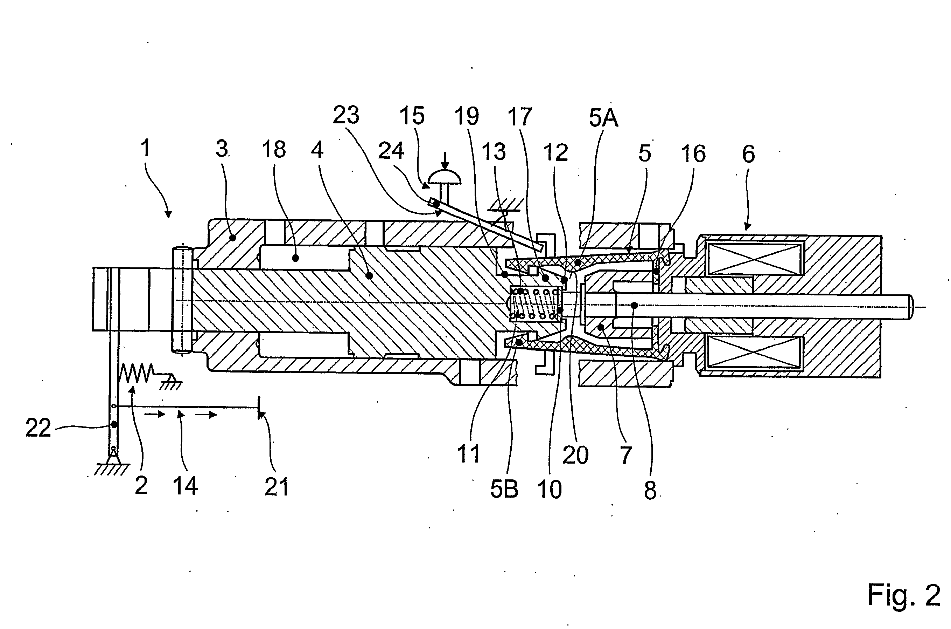

In Fig. 2 ist ein weiteres Ausführungsbeispiel einer erfindungsgemäß ausgeführten Aktuatorvorrichtung 1 dargestellt, welche sich von dem in Fig. 1 dargestellten Ausführungsbeispiel lediglich durch eine andere konstruktive Ausgestaltung der Notverriegelungseinrichtung 15 unterscheidet, weshalb in der nachfolgenden Beschreibung nur auf die Unterschiede eingegangen wird.

Bei der in Fig. 2 dargestellten Aktuatorvorrichtung 1 ist die Notverriegelungseinrichtung 15 mit einem Hebelarmelement 24 ausgeführt, mittels welchem die Federarme 5A und 5B direkt betätigbar sind. Dabei greift das Hebelarmelement 24 mit einem Ende direkt an den Federarmen 5A und 5B an, so dass bei entsprechender Betätigung des Hebelarmelementes 24 die mechanische (formschlüssige) Verbindung zwischen der Rasteinrichtung 5 und der Kolbeneinheit 4 durch Bewegen der Federarme 5A und 5B in radialer Richtung nach außen, d. h. von der Kolbeneinheit 4 bzw. dem reduzierten Durchmesserbereich 19 der Kolbeneinheit 4 weg, aufgehoben wird.

Vorliegend ist jedem der Federarme 5A und 5B ein am Gehäuse 3 gelagertes Hebelarmelement 24 zugeordnet, welche über einen geeignet weiteren Wirkmechanismus 23 in entsprechender Art und Weise betätigbar sind.

Hiervon abweichend kann es auch vorgesehen sein, dass die Federarme bei der Ausführung der Aktuatorvorrichtung gemäß Fig. 2 in nicht näher dargestellter Art und Weise durch einen Seilzug oder eine beliebige andere konstruktive Ausführung der Notverriegelungseinrichtung 15 aufgespreizt werden, so dass sich die Parksperre bei deaktivierter Rasteinrichtung aufgrund der Federkraft der Federeinrichtung 2 selbsttätig einlegt.

### Bezugszeichen

- 1: Aktuatorvorrichtung
- 2: Federeinrichtung
- 3: Gehäuse
- 4: Kolbeneinheit
- 5: Rasteinrichtung
- 5A, 5B: Federarm
- 6: elektromagnetische Betätigungseinrichtung
- 7: Löseelement
- 8: Kolbenstange
- 10: Federring
- 11: Federelement
- 12: Innenanschlag
- 13: Bohrung
- 14: Notentriegelungseinrichtung
- 15: Notverriegelungseinrichtung
- 16: radialer Bereich der Rasteinrichtung
- 17: konischer Bereich der Kolbeneinheit
- 18: Ringraum
- 19: verringerter Durchmesserbereich der Kolbeneinheit
- 20: konischer Bereich der Federarme
- 21: Wirkmechanismus
- 22: Hebelelement
- 23: weiterer Wirkmechanismus
- 24: Hebelarmelement

## Patentansprüche

1. Aktuatorvorrichtung (1) zum Betätigen eines Verriegelungsmechanismus, insbesondere zum Betätigen einer Parksperreneinrichtung eines mit einem Automatgetriebe ausgeführten Antriebsstranges eines Fahrzeuges, die wenigstens eine mit einem Fluid beaufschlagbare und in Abhängigkeit des Fluiddrucks entgegen einer in Schließrichtung des Verriegelungsmechanismus wirkenden Federeinrichtung (2) in Öffnungsrichtung des Verriegelungsmechanismus betätigbare und in axialer Richtung in einem Gehäuse (3) verschiebbar angeordnete Kolbeneinheit (4), eine in einer einem geöffneten Zustand des Verriegelungsmechanismus äquivalenten axialen Position der Kolbeneinheit (4) selbsttätig aktivierende Rasteinrichtung (5) zum Halten der Kolbeneinheit (4) in der dem geöffneten Zustand des Verriegelungsmechanismus äquivalenten axialen Position und eine elektromagnetische Betätigungseinrichtung (6) zum Betätigen eines Löseelements (7), das zum Deaktivieren der Rasteinrichtung (5) vorgesehen ist, aufweist, wobei die Kolbeneinheit (4) mit einer Notentriegelungseinrichtung (14) wirkverbunden ist, mittels der die Kolbeneinheit (4) in die dem geöffneten Zustand des Verriegelungsmechanismus äquivalente axiale Position bringbar ist, **dadurch gekennzeichnet, dass** die Rasteinrichtung (5), die Kolbeneinheit (4) und das Löseelement (7) derart miteinander zusammenwirken, dass bei geöffnetem Verriegelungsmechanismus und bei unbestromter elektromagnetischer Betätigungseinrichtung (6) sowie bei geschlossenem Verriegelungsmechanismus und bei Anliegen eines Fluiddrucks an der Kolbeneinheit (4), bei dem an der Kolbeneinheit (4) eine in Öffnungsrichtung des Verriegelungsmechanismus wirkende Kraftkomponente angreift, die kleiner als eine Lösekraft des Verriegelungsmechanismus ist, der Verriegelungsmechanismus in dem aktuell eingestellten Zustand verbleibt, wobei eine Notverriegelungseinrichtung (15) vorgesehen ist, mittels der die Rasteinrichtung (5) deaktivierbar ist.

2. Aktuatorvorrichtung nach Anspruch 1, **dadurch gekennzeichnet, dass** die Rasteinrichtung (5) wenigstens einen mit der Kolbeneinheit (4) in der dem geöffneten Zustand des Verriegelungsmechanismus äquivalenten axialen Position der Kolbeneinheit (4) in Wirkverbindung stehenden Federarm (5A, 5B) aufweist, mittels dem die Kolbeneinheit (4) entgegen der Federkraft der Federeinrichtung (2) in der dem geöffneten Zustand des Verriegelungsmechanismus äquivalenten axialen Position haltbar ist.

3. Aktuatorvorrichtung nach Anspruch 2, **dadurch gekennzeichnet, dass** der Federarm (5A, 5B) von der Notverriegelungseinrichtung (15) über das Löseelement (7) derart betätigbar ist, dass die Wirkverbindung zwischen dem Federarm (5A, 5B) und der Kolbeneinheit (4) durch das Löseelement (7) trennbar ist.

4. Aktuatorvorrichtung nach Anspruch 3, **dadurch gekennzeichnet, dass** die Notverriegelungseinrichtung (15) ein auf eine mit dem Löseelement (7) verbundene Kolbenstange (8) einwirkendes Hebelelement (22) aufweist, mittels welchem die Kolbenstange (8) und das Löseelement (7) derart mit dem Federarm (5A, 5B) in Wirkverbindung bringbar sind, dass ein mechanischer Formschluss zwischen dem Federarm (5A, 5B) und der Kolbeneinheit (4) entgegen einer Federvorspannung des Federarms (5A, 5B) lösbar ist.

5. Aktuatorvorrichtung nach Anspruch 4, **dadurch gekennzeichnet, dass** die Kolbenstange (8) mit ihrem dem Hebelelement (22) zusammenwirkenden Ende aus dem Gehäuse (3) vorkragt.

6. Aktuatorvorrichtung nach Anspruch 3 oder 4, **dadurch gekennzeichnet, dass** der Federarm (5A, 5B) von der Notverriegelungseinrichtung (15) unmittelbar derart ansteuerbar ist, dass die Wirkverbindung zwischen dem Federarm (5A, 5B) und der Kolbeneinheit (4) aufhebbar ist.

7. Aktuatorvorrichtung nach Anspruch 6, **dadurch gekennzeichnet, dass** das die Notverriegelungseinrichtung (15) ein auf den Federarm (5A, 5B) einwirkendes Hebelarmelement (24) aufweist, mittels welchem ein Formschluss zwischen dem Federarm (5A, 5B) und der Kolbeneinheit (4) entgegen einer Federvorspannung des Federarms (5A, 5B) lösbar ist.

8. Aktuatorvorrichtung nach Anspruch 7, **dadurch gekennzeichnet, dass** das Hebelarmelement (24) am Gehäuse (3) gelagert ist.

9. Aktuatorvorrichtung nach Anspruch 6, **dadurch gekennzeichnet, dass** die Notverriegelungseinrichtung mit einem auf den Federarm einwirkenden Seilzug ausgeführt ist, mittels welchem ein mechanischer Formschluss zwischen dem Federarm und der Kolbeneinheit entgegen einer Federvorspannung des Federarms lösbar ist.

10. Aktuatorvorrichtung nach einem der Ansprüche 1 bis 9, **dadurch gekennzeichnet, dass** das Löseelement (7) mittels der elektromagnetischen Betätigungseinrichtung (6) aus einer ersten Position, bei der die Rasteinrichtung (5) aktiviert ist, in eine zweite die Rasteinrichtung (5) deaktivierende Position bringbar ist.

## Claims

1. Actuator apparatus (1) for actuating a locking mechanism, in particular for actuating a parking lock device of a vehicle drive train constructed with an automatic transmission, comprising at least one piston unit (4), which is loadable with a fluid and in dependence upon the fluid pressure is actuable in opening direction of the locking mechanism counter to a spring device (2) acting in closing direction of the locking mechanism and is disposed displaceably in axial direction in a housing (3), a detent device (5), which automatically activates in an axial position of the piston unit (4) equivalent to an open state of the locking mechanism, for holding the piston unit (4) in the axial position equivalent to the open state of the locking mechanism, and an electromagnetic actuating device (6) for actuating a release element (7) that is provided for deactivating the detent device (5), wherein the piston unit (4) is workingly connected to an emergency unlocking device (14), by means of which the piston unit (4) is movable into the axial position equivalent to the open state of the locking mechanism, **characterized in that** the detent device (5), the piston unit (4) and the release element (7) interact in such a way with one another that, when the locking mechanism is open and the electromagnetic actuating device (6) is not energized as well as when the locking mechanism is closed and a fluid pressure is applied to the piston unit (4) such that piston unit (4) is acted upon by a component of force acting in opening direction of the locking mechanism that is lower than a release force of the locking mechanism, the locking mechanism remains in the actually set state, wherein an emergency locking device (15) is provided, by means of which the detent device (5) may be deactivated.

2. Actuator apparatus according to claim 1, **characterized in that** the detent device (5) comprises at least one spring arm (5A, 5B), which is workingly connected to the piston unit (4) in the axial position of the piston unit (4) equivalent to the open state of the locking mechanism and by means of which the piston unit (4) is holdable in the axial position equivalent to the open state of the locking mechanism counter to the spring force of the spring device (2).

3. Actuator apparatus according to claim 2, **characterized in that** the spring arm (5A, 5B) is actuable by the emergency locking device (15) via the release element (7) in such a way that the working connection between the spring arm (5A, 5B) and the piston unit (4) is breakable by means of the release element (7).

4. Actuator apparatus according to claim 3, **characterized in that** the emergency locking device (15) comprises a lever element (22), which acts upon a piston rod (8) connected to the release element (7) and by means of which the piston rod (8) and the release element (7) are movable in such a way into working connection with the spring arm (5A, 5B) that a mechanical form closure between the spring arm (5A, 5B) and the piston unit (4) is releasable counter to a spring bias of the spring arm (5A, 5B) .

5. Actuator apparatus according to claim 4, **characterized in that** the piston rod (8) projects with its end that interacts with the lever element (22) from the housing (3) .

6. Actuator apparatus according to claim 3 or 4, **characterized in that** the spring arm (5A, 5B) is directly controllable by the emergency locking device (15) in such a way that the working connection between the spring arm (5A, 5B) and the piston unit (4) may be cancelled.

7. Actuator apparatus according to claim 6, **characterized in that** the the emergency locking device (15) comprises a lever arm element (24), which acts upon the spring arm (5A, 5B) and by means of which a form closure between the spring arm (5A, 5B) and the piston unit (4) is releasable counter to a spring bias of the spring arm (5A, 5B) .

8. Actuator apparatus according to claim 7, **characterized in that** the lever arm element (24) is mounted on the housing (3).

9. Actuator apparatus according to claim 6, **characterized in that** the emergency locking device is constructed with a Bowden wire, which acts upon the spring arm and by means of which a mechanical form closure between the spring arm and the piston unit is releasable counter to a spring bias of the spring arm.

10. Actuator apparatus according to one of claims 1 to 9, **characterized in that** the release element (7) is movable by means of the electromagnetic actuating device (6) from a first position, in which the detent device (5) is activated, into a second position, in which the detent device (5) is deactivated.

## Revendications

1. Dispositif actionneur (1) destiné à l'actionnement d'un mécanisme de verrouillage, en particulier à l'actionnement d'un dispositif de frein de stationnement appartenant à une chaîne cinématique à boîte de vitesses automatique d'un véhicule, ledit dispositif comprenant au moins une unité de piston (4) pouvant être sollicitée avec un fluide et pouvant être actionnée dans le sens de l'ouverture du mécanisme de verrouillage en fonction de la pression de fluide et à l'encontre d'un dispositif à ressort (2) qui agit dans le sens de la fermeture du mécanisme de verrouillage, et qui est montée mobile en translation dans la direction axiale dans un corps (3), un dispositif d'encliquetage (5) s'activant automatiquement dans une position axiale de l'unité de piston (4) équivalente à un état ouvert du mécanisme de verrouillage, et destiné à maintenir l'unité de piston (4) dans la position axiale équivalente à l'état ouvert du mécanisme de verrouillage, et un dispositif d'actionnement électromagnétique (6) destiné à l'actionnement d'un élément de libération (7) qui est prévu pour la désactivation du dispositif d'encliquetage (5), dans lequel l'unité de piston (4) est reliée fonctionnellement à un dispositif de déverrouillage de secours (14) au moyen duquel l'unité de piston (4) peut être placée dans la position axiale équivalente à l'état ouvert du mécanisme de verrouillage, **caractérisé en ce que** le dispositif d'encliquetage (5), l'unité de piston (4) et l'élément de libération (7) coopèrent entre eux de telle manière que, lorsque le mécanisme de verrouillage est ouvert, que le dispositif d'actionnement électromagnétique (6) n'est pas sous tension, que le mécanisme de verrouillage est fermé et qu'une pression de fluide est appliquée à l'unité de piston (4), une composante de force qui agit dans le sens de l'ouverture du mécanisme de verrouillage et qui est plus petite qu'une force de libération du mécanisme de verrouillage attaque l'unité de piston (4), tandis qu'il est prévu un dispositif de verrouillage de secours (15) au moyen duquel le dispositif d'encliquetage (5) peut être désactivé.

2. Dispositif actionneur selon la revendication 1, **caractérisé en ce que** le dispositif d'encliquetage (5) comporte au moins une branche de ressort (5A, 5B) qui est en liaison fonctionnelle avec l'unité de piston (4) dans la position axiale de l'unité de piston (4) équivalente à l'état ouvert du mécanisme de verrouillage, au moyen de laquelle l'unité de piston (4) peut être retenue dans la position axiale équivalente à l'état ouvert du mécanisme de verrouillage à l'encontre de la force élastique du dispositif à ressort (2).

3. Dispositif actionneur selon la revendication 2, **caractérisé en ce que** la branche de ressort (5A, 5B) peut être actionnée par le dispositif de verrouillage de secours (15) par l'intermédiaire de l'élément de libération (7) de telle manière que la liaison effective entre la branche de ressort (5A, 5B) et l'unité de piston (4) peut être interrompue par l'élément de libération (7).

4. Dispositif actionneur selon la revendication 3, **caractérisé en ce que** le dispositif de verrouillage de secours (15) comporte un élément formant levier (22) agissant sur une tige de piston (8) reliée à l'élément de libération (7), et au moyen duquel la tige de piston (8) et l'élément de libération (7) peuvent être mis en liaison effective avec la branche de ressort (5A, 5B) de manière qu'une liaison mécanique par complémentarité de forme entre la branche de ressort (5A, 5B) et l'unité de pison (4) puisse être supprimée à l'encontre d'une précontrainte élastique de la branche de ressort (5A, 5B).

5. Dispositif actionneur selon la revendication 4, **caractérisé en ce que** la tige de piston (8) fait saillie en dehors du corps (3) par son extrémité qui coopère avec l'élément formant levier (22).

6. Dispositif actionneur selon la revendication 3 ou 4, **caractérisé en ce que** la branche de ressort (5A, 5B) peut être commandée directement par le dispositif de verrouillage de secours (15) afin que la liaison effective entre la branche de ressort (5A, 5B) et l'unité de piston (4) puisse être interrompue.

7. Dispositif actionneur selon la revendication 6, **caractérisé en ce que** le dispositif de verrouillage de secours (15) comporte un élément formant bras de levier (24) qui agit sur la branche de ressort (5A, 5B) et au moyen duquel une liaison par complémentarité de forme entre la branche de ressort (5A, 5B) et l'unité de piston (4) peut être supprimée à l'encontre d'une tension élastique de la branche de ressort (5A, 5B).

8. Dispositif actionneur selon la revendication 7, **caractérisé en ce que** l'élément formant branche de levier (24) est monté sur le corps (3).

9. Dispositif actionneur selon la revendication 6, **caractérisé en ce que** le dispositif de verrouillage de secours est réalisé avec une commande par câble qui agit sur la branche de ressort et au moyen de laquelle une liaison mécanique par complémentarité de forme entre la branche de ressort et l'unité de piston peut être supprimée à l'encontre d'une précontrainte élastique de la branche de ressort.

10. Dispositif actionneur selon l'une des revendications 1 à 9, **caractérisé en ce que** l'élément de libération (7) peut être amené au moyen du dispositif d'actionnement électromécanique (6) d'une première position dans laquelle le dispositif d'encliquetage (5) est activé, à une seconde position qui désactive le dispositif d'encliquetage (5).
